# EUROPÄISCHE PATENTSCHRIFT

(11) **EP 1 114 001 B1**
(45) Veröffentlichungstag und Bekanntmachung des Hinweises auf die Patenterteilung: **15.12.2004**
(21) Anmeldenummer: 99944333.6
(22) Anmeldetag: 04.08.1999
(51) Int. Cl.: C03C 17/00

(54) **BESCHICHTUNGSVORRICHTUNG ZUR HERSTELLUNG EINER VERBUNDSCHEIBE UND EINER ZWEIACHSIG GEBOGENE VERBUNDSCHEIBE**
COATING DEVICE FOR PRODUCING A COMPOSITE GLASS AND BIAXIALLY BENT COMPOSITE GLASS
DISPOSITIF D'ENDUCTION PERMETTANT DE FABRIQUER UN VERRE FEUILLETE ET UN VERRE FEUILLETE BIAXIALEMENT INCURVE

(30) Priorität: 06.08.1998 DE 19835496
(43) Veröffentlichungstag der Anmeldung: 11.07.2001
(60) Teilanmeldung: 02028919.5
(73) Patentinhaber: Haverkamp GmbH, 48165 Münster (DE)
(72) Erfinder: HAVERKAMP, Ulrich, D-48149 Münster (DE); NIEMEYER, Friedel, D-49328 Melle (DE)
(74) Vertreter: Hoffmeister, Helmut, Dr. Dipl.-Phys.
(86) Internationale Anmeldenummer: PCT/EP1999/005649
(87) Internationale Veröffentlichungsnummer: WO 2000/007953

(56) Entgegenhaltungen:
- EP-A- 0 403 321
- WO-A-88/01230
- DE-A- 4 422 449
- US-A- 3 944 461
- US-A- 4 327 634
- US-A- 5 227 185
- US-A- 5 728 252

## Beschreibung

Die Erfindung betrifft eine Vorrichtung zur Herstellung einer Verbundscheibe gemäß den Oberbegriffen der Ansprüche 1 und 2.

Eine solche Vorrichtung ist aus der US-Patentschrift 3 944 461 bekannt. Die Nachteile einer diskontinuierlichen. Fertigungsweise bei einer Beschichtung von Glaselementen mit Kunststoffolien im Autoklaven werden hierdurch vermieden. Durch unmittelbar vor den Kalanderwalzen angeordnete Aktivierungs- und Reinigungsvorrichtungen werden Einschlüsse von Staub- und Feuchtigkeit weitgehend vermieden. Einachsig und zweiachsig gebogene Glaselemente werden nicht beschichtet.

Aus der US-Patentschrift 4 327 634 ist eine Vorrichtung zur Verbindung von Glasscheiben und Kunststoffolien bekannt. Die Vorrichtung umfaßt eine untere Andruckrolle, die an die konkave Form des Glases über eine variierbare Durchbiegung anpaßbar ist. Eine mit einer Folie belegte, gebogene Glasscheibe wird durch ein Walzenpaar, bestehend aus der unteren, gebogenen Rolle und einer darüber angeordneten, zylindrischen Rolle, hindurch gezogen.

Ein Nachteil dieser Erfindung ist die aufwendige Bauweise der Vorrichtung und zudem die zeitintensive Anpassung der Rollendurchbiegung an die Form des aktuell verwendeten Glaselementes. Ausgegangen wird außerdem von einer Polyurethan-Folie, die mit einer thermoplastischen, klebfähigen Schicht versehen ist. Es hat sich gezeigt, daß mit einer solchen Schicht als Haftvermittler keine ausreichende Haftung durch Kalandrierung erreicht werden kann. Eine Erhöhung der Klebkraft kann nur über einen Autoklaven-Prozeß mit allen bekannten Nachteilen bewirkt werden. Um die im Stand der Technik vorgesehene Durchbiegung einer Andruckrolle zu bewirken und die hohen dabei auftretenden Kräfte aufzunehmen, ist eine sehr steife und mithin schwere Konstruktion erforderlich. Die Kosten der Vorrichtung werden weiterhin dadurch erhöht, daß eine Vielzahl von Verstellelementen vorzusehen ist. Nachteilig ist auch, daß Formabweichungen zwischen gebogener Rolle und Glaselement zum Bruch des Glaselementes führen können. Mit den bekannten Vorrichtungen ist es insbesondere nicht möglich, Formänderungen mit unstetigem Kurvenverlauf, wie sprunghafte Dickenänderungen im Randbereich, dauerhaft mit einer Folie zu verbinden.

Verbundscheiben, die mit dieser bekannten Vorrichtung gefertigt worden sind, weisen eine Vielzahl von Fremdpartikel-Einschlüssen auf, wodurch die Homogenität und Durchsichtigkeit der Verbundscheibe herabgesetzt wird, so daß diese entweder nur in nebengeordneten Bereichen verwendbar oder auszusondern sind.

Es ist Aufgabe der Erfindung, eine Vorrichtung anzugeben, die kostengünstig herzustellen und einfach zu bedienen ist. Die Vorrichtung soll weiterhin eine fehlstellenfreie und dauerhafte Verbindung zwischen einer Folie und einer Vielzahl von Glaselement-Formen herstellen.

Diese Aufgabe wird bei einer Beschichtungsvorrichtung gemäß dem Oberbegriff des Anspruchs 1 dadurch gelöst, daß wenigstens eine der Kalanderwalzen aus einer Achse mit endseitig angeordneten Druckkörpern, die axial verschiebbar und festlegbar sind, und einem zwischen den Druckkörpern liegendem und die Achse umfassendem, elastischem Walzenquetschkörper mit ringförmigem Querschnitt gebildet ist, welcher Walzenquetschkörper bei einer mittels der Druckkörper hervorgerufenen axialen Stauchung in einem Zentralbereich einen gegenüber den Randbereichen erhöhten Durchmesser aufweist.

Diese Aufgabe wird außerdem bei einer Beschichtungsvorrichtung gemäß dem Oberbegriff des Anspruchs 2 dadurch gelöst, daß wenigstens eine der Kalanderwalzen aus wenigstens zwei Walzenkernkörpern besteht, die nebeneinander auf derselben Rotationsachse angeordnet sind und die von einem elastischen Walzenkörper mit ringförmigem Querschnitt umfaßt sind.

Die Klebstoffschicht wird aktiviert und die zu beschichtende Oberfläche des Glaselementes wird gereinigt, so daß eine optimale Vorbehandlung der Fügeflächen gegeben ist. Durch die Anordnung der Reinigungs- und Aktivierungsvorrichtung nahe am Kalander wird eine erneute Verschmutzung der Fügeflächen verhindert.

Überraschenderweise wurden hervorragende Beschichtungsergebnisse mit den parallel zueinander ausgerichtete Achsen der Kalanderwalzen und einem konstanten Winkel der Kalanderwalzenanordnung zur Förderebene erzielt. Verstellmöglichkeiten der Achsen selbst, sowie der Achsenstellung zueinander und in Bezug auf die Förderrichtung sind nicht erforderlich. Damit ist eine gegenüber dem eingangs zitierten Stand der Technik erheblich vereinfachte und kostengünstigere Vorrichtung geschaffen. Eine weitergehende Anpassungsmöglichkeit der Kalanderwalzen-Beschaffenheit wird ermöglicht, indem wenigstens eine der Kalanderwalzen mehrere Kalanderwalzenabschnitte aufweisen, wobei die Oberflächen- oder Stauchhärte jedes Walzenabschnittes an das zu beschichtende Glaselement anpaßbar ist.

Die Folienzuführung erfolgt vorteilhafterweise in der Weise, daß die Folie die rotierende obere Kalanderwalze zwischen einem Zuführungspunkt und einem Ablösungspunkt über einen Winkel von 90° bis 270° umschlingt. Damit wird ein glattes Anliegen der Folie an der Kalanderwalze erreicht, so daß die Folie bereits faltenfrei auf das Glaselement aufgebracht wird.

Die Reinigungsvorrichtung zur Reinigung der zu beschichtenden Oberfläche des Glaselementes umfaßt wenigstens eine Staubabsaugung und ein die Oberfläche kontaktierendes Bürstenband. Das zwischen zwei Wellen gespannte Bürstenband löst Fremdpartikel von der Oberfläche und fördert diese zu den Außenkanten des Glaselementes. Mit der Staubabsaugung wird eine Entfernung der Partikel aus dem Arbeitsbereich sowie eine Reinigung des Bürstenbandes erreicht.

In einer besonders vorteilhaften Ausführungsform umfaßt die Reinigungsvorrichtung ein erstes und ein zweites Bürstenband. Das erste Bürstenwand wirkt dabei von einem zentralen Bereich der Oberfläche in Richtung einer ersten Außenkante des Glaselementes. Das zweite Bürstenband wirkt von dem zentralen Bereich in Richtung einer gegenüberliegenden zweiten Außenkante des Glaselementes. Durch die Wirkungsrichtung von innen nach außen werden Fremdpartikel effektiv von dem Glaselement entfernt; zugleich werden bei dieser Wirkungsrichtung die Außenkanten des Glaselementes nicht belastet. Aufgrund der Zweiteilung wird zudem ein kürzerer Durchlauf bzw. eine effektivere Reinigung erzielt.

Um auch in dem zentralen Bereich einen vollständigen Schmutzabtrag sichern zu können, wirken dort das erste und das zweite Bürstenband in überlappenden Bereichen. Sie sind in Förderrichtung versetzt hintereinander angeordnet, so daß der zentrale Überlappungsbereich von beiden Bürstenbändern gereinigt wird. Denkbar sind hier auch Ausführungsformen mit mehr als zwei Bürstenbändern, die kaskadenartig angeordnet sein können.

Vorteilhaft ist es, daß die Reinigungsvorrichtung wenigstens eine Bürstenband-Befeuchtungsvorrichtung umfaßt, die mit einem Erdleiter elektrisch leitend verbunden ist. Die elektrostatische Aufladung, die insbesondere von den über die Oberfläche streichenden Bürsten herrührt, wird abgeleitet. Die Befeuchtung wird so gewählt, daß eine Ableitung der Elektrizität aus den Bürsten ermöglicht ist, ohne daß jedoch eine Benetzung der zu reinigenden Oberfläche erfolgt.

Besonders gute Ergebnisse wurden erzielt, wenn die Elastomerbeschichtungen der oberen und unteren Kalanderwalzen eine Oberflächenhärte von 35 bis 85 Shore A (gemessen nach DIN 53505) aufweisen. Eine gute Nachgiebigkeit der elastomeren Beschichtung der Kalanderwalzen und eine gute Verformungs-Rückbildungsfähigkeit, liegt vor, wenn die Elastomerbeschichtungen eine Stauchhärte von 5 bis 25 kPa (gemessen bei 40% Verformung) aufweisen.

Günstig ist es ferner, die Kalanderwalze, die die zu beschichtende Oberfläche des Glaselementes kontaktiert, so zu wählen, daß ihre Oberflächen- und/oder Stauchhärte kleiner ist als die der jeweils anderen Kalanderwalze.

Weitere Unteransprüche der Erfindung werden im folgenden anhand der Zeichnung und mit Hilfe von Beispielen näher erläutert. Die Figuren zeigen im einzelnen:
- Fig. 1: einen Schnitt durch eine zum erfindungsgemäßen Beschichten verwendete Folie,
- Fig. 2: eine schematische Seitenansicht einer Vorrichtung gemäß der Erfindung,
- Fig. 3: ein Detail einer oberen Kalanderwalze aus Figur 2 in schematischer Seitenansicht,
- Fig. 4: eine Staubabsaugungsvorrichtung aus Figur 2 im Schnitt;
- Fig. 5: eine schematische Ansicht einer weiteren Ausbildungsform eines Kalanderwalzenpaares;
- Fig. 6: eine weitere Ausbildungsform einer Kalanderwalze in Schnittansicht;
- Fig. 7: eine weitere Ausbildungsform einer Kalanderwalze in Schnittansicht;
- Fig. 8: eine weitere Ausbildungsform einer Kalanderwalze in Schnittansicht;
- Fig. 9: ein Kupplungselement gemäß der Ausführungsform der Fig. 7 oder 8 in Draufsicht;

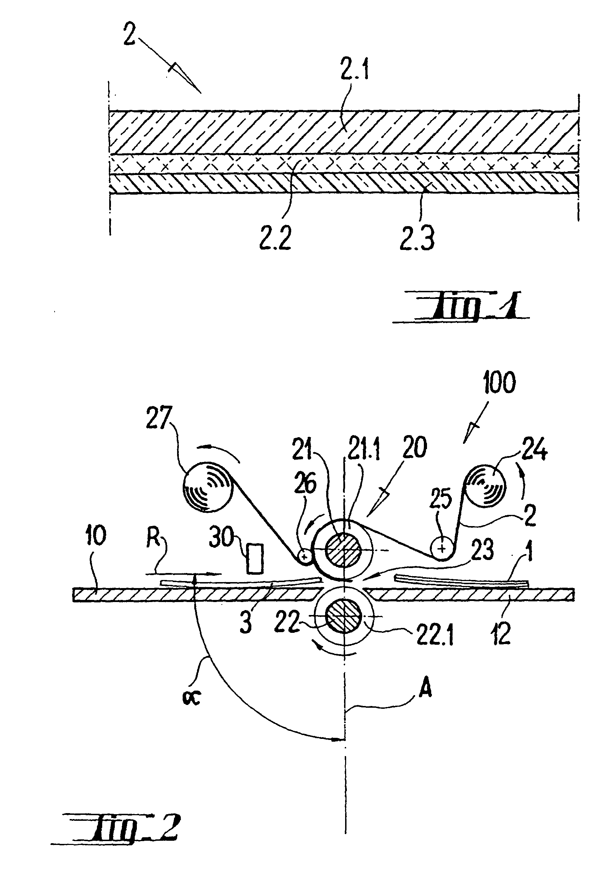

Figur 1 zeigt die Zusammensetzung einer Folie 2, wie sie zum erfindungsgemäßen Beschichten vorzugsweise Verwendung findet. Eine solche Folie besteht wenigstens aus einer Kunststoffolienschicht 2.1, einer Klebstoffschicht 2.2 und einer Schutzfolie 2.3.

Die Kunststoffolienschicht 2.1 kann ein- oder mehrschichtig sein und z. B. als Coextrudat hergestellt sein. Sie kann auch mit Beschichtungen oder mit eingemischten Zusätzen versehen sein, die die optischen und/oder elektrischen Eigenschaften beeinflussen können. So ist es möglich, Glaselemente herzustellen, die das Licht reflektieren, so daß die Wärmedurchlässigkeit und die Transparenz gemindert ist und sich ein Sonnen- und Sichtschutz ergibt. Mit elektrisch leitfähigen Beschichtungen oder in der Kunststoffolienschicht 2.1 enthaltenen elektrisch leitenden Drähten kann das fertige Verbundglas 1 in ein Alarmsystem zur Brucherfassung eingebunden werden oder es kann elektrisch beheizt werden.

Die Klebstoffschicht 2.2 besteht aus einem schnell aktivierbaren Klebstoff, der über Wärme oder Druck aktiviert werden. Sie kann auch dauerhaft klebrig und mit einer Schutzfolie 2.3 abgedeckt sein, so daß bereits mit Abziehen der Schutzfolie 2.3 eine aktivierte Klebstoffschicht 2.2 bereitgestellt ist.

Erfindungswesentlich ist, daß der verwendete Klebstoff im aktivierten Zustand nicht gleitfähig ist, d.h. er muß bei Kontakt mit dem Substrat eine sofortige Haftung bewirken. Gleitungen innerhalb der Klebstoffschicht 2.2 müssen verhindert werden, daher muß diese möglichst dünn sein und darf insbesondere nicht fließfähig oder gelartig sein.

Die Schutzfolie 2.3 schützt die Klebstoffschicht vor Verunreinigungen bis unmittelbar vor der Kalandrierung. Dazu weist sie wenigstens an ihrer der Klebstoffschicht 2.2 zugewandten Fläche eine haftungsvermindernde Oberfläche auf, so daß ein leichtes Ablösen von der Klebstoffschicht 2.2 ermöglicht ist. Als Schutzfolie 2.3 können beispielsweise auch Siliconpapiere verwendet werden.

In Figur 2 ist eine Beschichtungsvorrichtung 100 gemäß der Erfindung dargestellt. Diese umfaßt einen ersten und einen zweiten Support 10, 12, auf welchen die zu bearbeitenden Werkstücke geführt sind. Die Supports 10, 12 können beispielsweise aus einer Platte bestehen, welche mit Bürstenstreifen versehen ist, die sich in Förderrichtung R erstrekken und eine gleichmäßige und beschädigungsfreie Bewegung des Glaselementes 3 bzw. der fertigen Verbundscheibe 1 ermöglichen.

Zwischen den Supports 10, 12 ist ein Kalander 20 angeordnet, mit dem Folie 2 und Glaselement 3 blasen- und faltenfrei aneinander gelegt und zugleich dauerhaft verbunden werden. Der Kalander 20 besteht aus wenigstens zwei Kalanderwalzen 21, 22, die an ihrem Umfang jeweils mit einer elastomeren Oberflächenbeschichtung 21.1, 22.1 versehen sind.

Über dem - in Förderrichtung R gesehen - ersten Support 10 ist eine Reinigungsvorrichtung 30 angeordnet, die die zu beschichtende Oberfläche des Glaselementes 3 unmittelbar vor der Beschichtung reinigt.

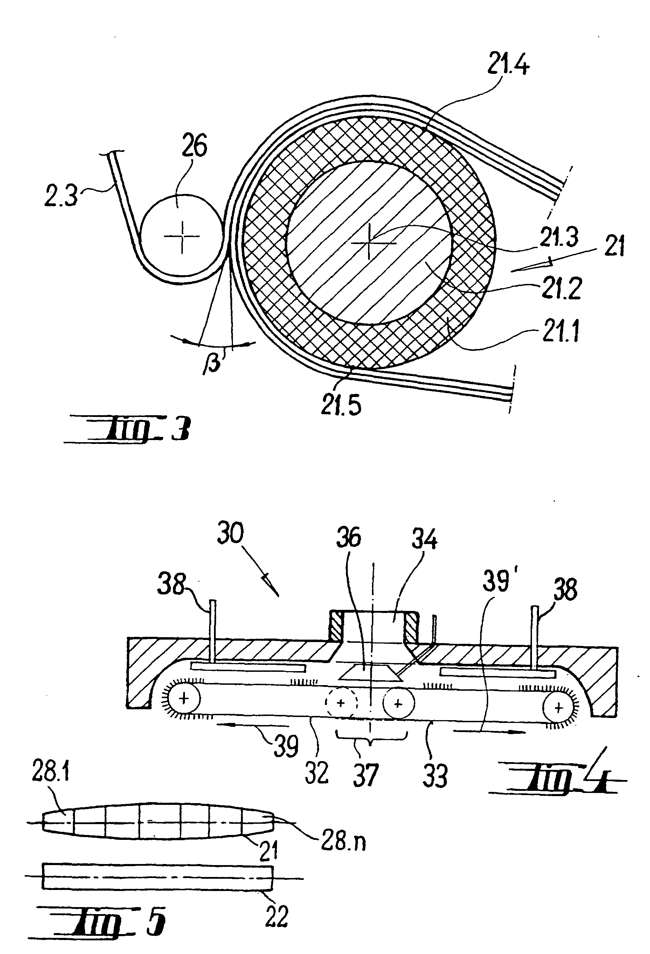

Von einer Vorratsrolle 24 wird die Folie 2 über eine Umlenkrolle 25 zu der oberen Kalanderwalze 21 geführt. Wie insbesondere Figur 3 zeigt, umschlingt die Folie 2 die rotierende Kalanderwalze 21, beginnend von einem Kontaktpunkt 21.4 bis zu einem Ablösepunkt 21.5.

Mit einem möglichst großen Umschlingungswinkel an der Kalanderwalze 21 wird die Folie 2 straff gespannt und blasen- und faltenfrei dem Kalanderspalt 23 zugeführt. Vor dem Eintritt in den Kalanderspalt wird die Schutzfolie 2.3 von der die Kalanderwalze 21 umschlingenden Folie 2 abgezogen. Die abgezogene Schutzfolie 2.3 wird um eine Abzugsrolle 26 gelenkt und auf einer Wickelrolle 27 aufgespult.

Um einen möglichst großen Schälwinkel β und damit eine gute Ablösung der Schutzfolie 2.3 von der Klebstoffschicht 2.2 zu erreichen, weist die Abzugsrolle 26 einen im Verhältnis zur Kalanderwalze 21 kleinen Durchmesser auf und ist sehr nah an dieser angeordnet, wie Figur 3 zeigt.

Die obere Kalanderwalze 21 rotiert um eine Rotationsachse 21.3 und hat im unbelasteten Zustand einen kreisrunden Querschnitt. Auf einem Kern 21.2, der als Metallhohl- oder vollprofil ausgebildet sein kann, ist eine Elastomerbeschichtung 21.1 aufgebracht. Die untere Kalanderwalze 22 ist in ähnlicher Weise aufgebaut und mit einer Elastomerbeschichtung 22.1 versehen.

Die Elastomerbeschichtungen 21.1 und 22.1 können gleichartig sein. Sie sind aber vorteilhafterweise entsprechend ihrer Funktion gewählt. Dazu ist die obere, folienzuführende Kalanderwalze 21 so beschaffen, daß ein ausreichender Druck auf die Folie 2 zur Erzielung einer dauerhaften Klebverbindung ausgeübt werden kann, ohne jedoch das darunter befindliche Glaselement 3 bis an die Bruchgrenze zu belasten. Die Elastomerbeschichtung 21.1 der Walze muß während des Beschichtungsprozesses ein solches Rückformungsverhalten aufweisen, daß sie sich auch nach starken Formänderungen, z. B. nach einer starken Stauchung im Randbereich des Glaselements 3, schnell wieder ausdehnt und ausreichende Rückstellkraft besitzt, um ein kontinuierliches Anschmiegen der Walzenoberfläche an die Fügepartner zu gewährleisten.

Die untere Kalanderwalze 22 hat im vorliegenden Ausführungsbeispiel einer Vorrichtung 100 die Funktion, das Glaselement 3 von unten abzustützen und eine Gegenkraft zu der Anpreßkraft der oberen Kalanderwalze 21 zu bilden. Es ist daher günstig, bei der unteren Walze 22 eine Elastomerbeschichtung 22.1 mit einer gegnüber der oberen Walze 21 größeren Stauch- und/oder Oberflächenhärte zu wählen.

Figur 4 zeigt die Reinigungseinrichtung 30 der Beschichtungsvorrichtung 100. Diese weist einen Reinigungsbereich auf, der wenigstens der Breite des zu reinigenden Glaselementes entspricht. Die Reinigung erfolgt über endlose Bürstenbänder 32, 33, die um Walzen oder Räder geführt sind. In der Figur ist eine bevorzugte Ausführungsform dargestellt, bei der die Bürstenbänder 32, 33 von innen nach außen wirken und sich deren Wirkungsbereich in einem Zentralbereich 37 der Reinigungseinrichtung 30 überlappt. Die Wirkungsrichtungen sind durch die Pfeile 39, 39° dargestellt.

Die Bürstenbänder 32, 33 werden im Zentralbereich 37 kurz vor dem Kontakt mit der zu reinigenden Oberfläche durch eine Befeuchtungseinrichtung 36 angefeuchtet, um elektrostatische Elektrizität ableiten zu können. Hierzu ist die Befeuchtungseinrichtung 36 mit einem Erdleiter verbunden. Um die Bürstenbänder 32, 33 von dem aufgenommenen Schmutz zu befreien, werden sie, nachdem sie sich von der Glaselementoberfläche abgehoben haben, mit Trocknungseinrichtungen 38 getrocknet. Gleichzeitig bewirkt eine Staubabsaugung 34, daß der Schmutz von den Bürstenbändern 32, 33 und aus dem Arbeitsbereich der Beschichtungsvorrichtung 100 entfernt wird. Die Bürstenbänder 32, 33 können mit federnd gelagerten Elementen und weiteren Rollen oder Walzen gestützt werden, so daß eine optimale Anpassung an die Form der zu reinigenden Oberfläche gewährleistet ist.

Eine weitere Ausbildungsform eines Kalanderwalzenpaars ist in Figur 5 dargestellt. Um bei größeren konkaven Durchbiegungen der Glaselementoberfläche ein kontinuierliches Anschmiegen der oberen, folienführenden Kalanderwalze 21 zu ermöglichen weist diese eine an das Glaselement angepaßte Kontur auf. Vorteilhafterweise ist dazu die Elastomerbeschichtung 21.1 oder die gesamte obere Kalanderwalze 21 aus einer Vielzahl von Walzenabschnitten 28.1,...,28.n gebildet. Damit können über die Beschichtungsauswahl bereichsweise angepaßte Anpressdrükke bewirkt werden. Möglich ist auch eine hohlkammerartige Ausbildung der Walzenabschnitte 28.1,...,28.n, wobei der Innendruck jeder Hohlkammer anpaßbar ist.

Darüberhinaus wird vorgeschlagen, die gesamte Walzenbeschichtung 21.1 als Hohlkammer auszubilden und mit einem Fluid oder einem fließfähigem Gel zu füllen. Hierdurch ergibt sich eine gleichmäßige Druckverteilung über die gesamte Berührungsfläche und ein effektiver Abbau von Spannungsspitzen.

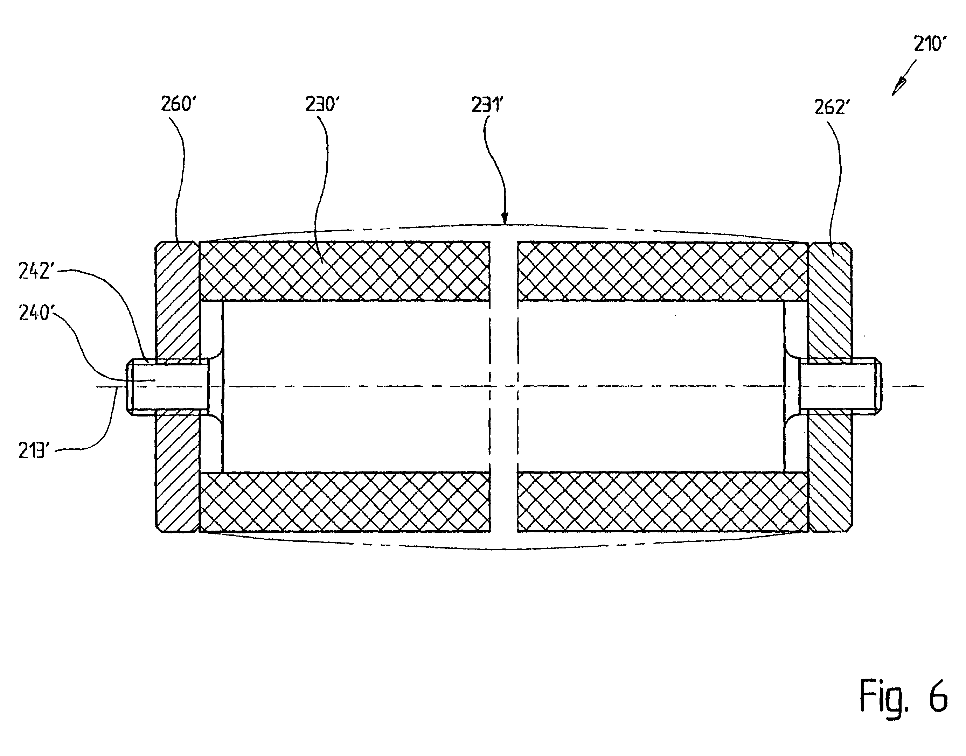

Die in Figur 6 gezeigte Ausführungsform einer Kalanderwalze 210' besteht im wesentlichen aus einem elastischen Walzenquetschkörper 230', der auf eine Achse 240' aufgeschoben ist. Die Achse 240' weist endseitig Gewindeabsätze 242', 244' auf, auf die Druckkörper 260', 262' geschraubt sind. Durch die Verschraubung werden die Druckkörper 260', 262' in die Walzenmitte bewegt. Dabei wird der dazwischen eingeschlossene Walzenquetschkörper 230' axial gestaucht, so daß der Walzenquetschkörper 230' eine bauchigere Kontur 231' aufweist, bei der die Kalanderwalze 210' in einem Zentralbereich einen gegenüber den Randbereichen erhöhten Durchmesser aufweist, so daß die Anpassung der Walzenform an ein konkav gebogene Glaselement 3 verbessert ist.

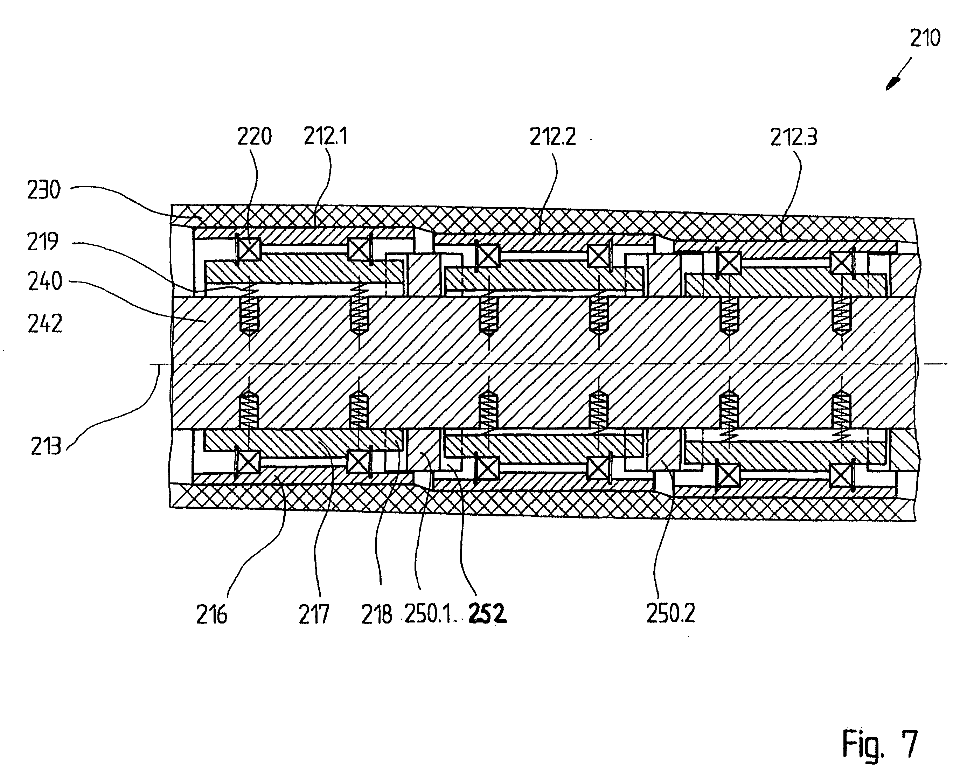

Noch eine weitere Ausbildung einer Kalanderwalze 210 ist in Figur 7 dargestellt. Diese Walze ist aus Walzenkernkörpern 212.1, 212.2, 212.3 gebildet, die nebeneinander auf derselben Rotationsachse 213 angeordnet sind. Die einzelnen Walzenkernkörper 212.1, 212.2, 212.3 sind von einem gemeinsamen elastischen Walzenbelagkörper 230 umfaßt.

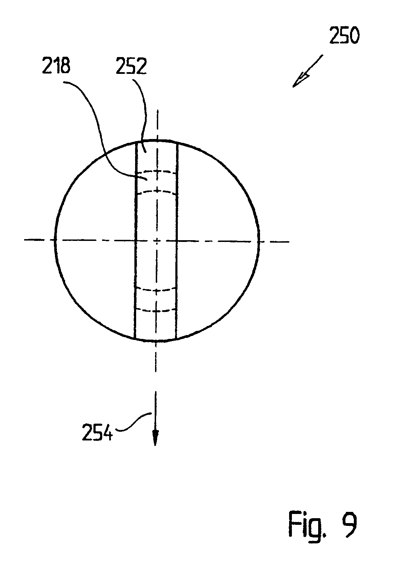

Die Walzenkernkörper 212.1, 212.2, 212.3 können so ausgebildet sein, daß benachbarte Enden zweier Walzenkernkörper koppelbar sind. Bevorzugt sind die Walzenkernkörper 212.1, 212.2, 212.3 über Kupplungselemente 250.1, 250.2 verbunden. Die Walzenkernkörper 212.1, 212.2, 212.3 weisen dabei an wenigstens einem ihrer Enden einen Wellenabsatz 218.1 auf, der in eine kompatible Senkung 252 des Kupplungselements 250.1 eingreift. Die in Fig. 9 dargestellte Senkung 252 erstreckt sich in Richtung der mit dem Pfeil 254 dargestellten Hauptdruckrichtung der Kalanderwalze 210. Mit einem entsprechend ausgebildeten, in die Senkung 252 eingreifenden Wellenabsatz 218 ist ein Ausfedern einzelner Abschnitte der Walze 210 und damit eine Anpassung an die Form des Glaselements zu ermöglichen möglich. Hierzu bestehen die Walzenkernkörper 212 jeweils aus einem Außenring 216, der von dem Walzenbelagkörper 230 umfaßt wird und der über ein Wälzlager 220 mit einem Innenring 217 verbunden ist. Der Innendurchmesser des Innenrings ist größer als der Außendurchmesser einer innenliegenden Achse 240, mit der der Innenring 217 über wenigstens zwei radial verformbare Federelemente 219 verbunden ist.

Im Ruhezustand, in dem der mittlere Walzenkernkörper 212.2 der Figur 7 abgebildet ist, ist der Innenring 217 und damit der Walzenkernkörper konzentrisch zur Achse 240 angeordnet. Je nach Stärke und Richtung einer auf die Kalanderwalze 210 wirkenden Kraft können einzelne Walzenkernkörper 212.1, 212.3 ausfedern. Der Federweg beträgt je nach der Federkonstante der Federelemente 219 und der Belastung bis zu 5 mm. Der die Walzenkernkörper 212 umhüllende Walzenbelagkörper 230 paßt sich dabei kontinuierlich an, so daß abweichend von der ursprünglichen zylindrischen Mantellinie des Walzenbelagkörpers eine gebogene Hüllkurve eingestellt wird. Dabei kann der Radius der gebogenen Außenkontur bis zu 12 mm von dem zylinderradius abweichen.

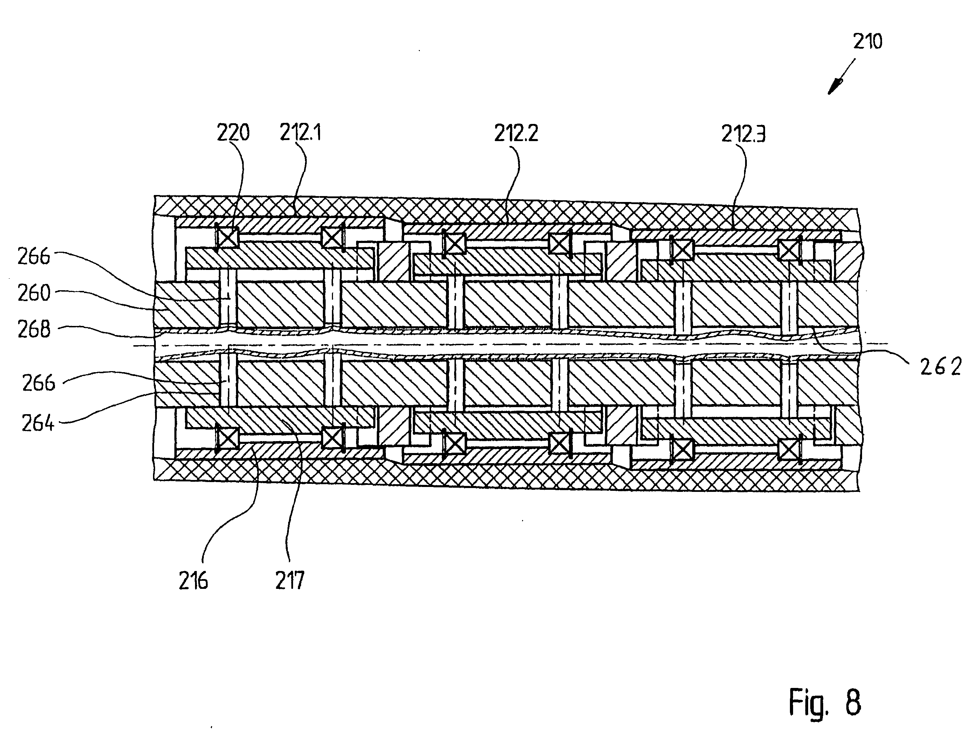

Um einen Druckausgleich zwischen einzelnen Bereichen der Kalanderwalze 210 zu ermöglichen, ist der Innenring 217 bei der Ausführungsform gemäß Fig. 8 über radial verschiebbare Kolbenelemente 266 gegenüber der Achse 260 festgelegt. Die Kolbenelemente 266 sind in radialen Bohrungen 264 in der Achse 260 geführt. Die Bohrungen 264 münden in einer Achsbohrung 262. Vorzugsweise ist jedoch in die Achsbohrung 262 ein flexibler und expandierbarer Druckschlauch 268, der mit einem kompressiblen Medium gefüllt ist, eingezogen. Im Ruhezustand liegen die Kolbenelemente 266 auf dem Druckschlauch 268 auf. Wenn starke Druckkräfte auf die Kalanderwalze 210 wirken, können die Walzenkernkörper 212.1 ... 212.3 ausfedern, wobei die Kolbenelemente 266 zum Teil in den Druckschlauch 268 gedrückt werden. Hierdurch wird der Innendruck im Druckschlauch 268 erhöht. Der erhöhte Innendruck wiederum bewirkt eine Rückstellkraft, so daß nach Fortfall der Belastung die Walzenkernkörper 212.1 ... 212.3 über die Kolbenelemente 266 in den zur Achse 260 konzentrischen Ruhezustand zurück bewegt werden.

Möglich ist es weiterhin, jedes Kolbenelement gegenüber der Bohrung abzudichten und die Achsbohrung mittels eines Fluids direkt mit Druck zu beaufschlagen.

Die Erfindung wird nachfolgend anhand von Beispielen erläutert:

### Beispiel 1:

Eine 100 µm starke PET-Folie 2 ist mit einer 10 µm dicken Klebstoffschicht 2.2 aus einem Acrylatklebstoff versehen, der über Druck aktivierbar ist. Der Klebstoff ist mit einer Schutzfolie 2.3 (release liner) aus Polyethylen (PE) abgedeckt. Das zu beschichtende Glaselement 3 ist eine zweiachsig gebogene Automobil-Seitenverglasung, deren größte konkave Durchbiegung 12 mm beträgt. Das Glaselement 3 wird zunächst entlang der Reinigungsvorrichtung 30 und dann zusammen mit der Folie 2, von der die Schutzfolie 2.3 abgezogen ist, in den Kalanderspalt 23 geführt. Die Folie 2 und das Glaselement 3 werden mittels der Kalanderwalzen 21, 22 blasen- und faltenfrei aneinandergelegt und haften sofort aneinander. Entlang der Kanten der so erhaltenen Verbundscheibe 1 werden überstehende Folienreste abgetrennt. Die Verbundscheibe ist gebrauchsfertig.

### Beispiel 2

Eine Folie weist eine Kunststoffschicht, bestehend aus zwei PET-Lagen und einer innenliegenden Lage aus Polyvinylbutylen (PVB), auf. Die Klebstoffschicht ist dauerhaft klebrig und mit einem Siliconpapier abgedeckt. Die Folie wird wie in Beispiel 1 mit einem Glaselement zu einer Verbundscheibe verbunden.

Eine solche Verbundscheibe bietet eine erhöhte Widerstandskraft gegen Stöße und verhindert im Fall des Bruches der Scheibe selbst bei scharfkantigen Splittern ein Eindringen in den Fahrzeuginnenraum.

### Beispiel 3

Das Glaselement besteht aus zwei dünnen, zweiachsig Glasscheiben mit einer innenliegenden, dickeren Polycarbonatscheibe. Bei einem solchen mehrschichtigen Glaselement ergibt sich eine verbesserte Schall- und Wärmedämmung bei gleichzeitiger Gewichtsreduzierung. Die Glasscheiben können nur in Randbereichen gehärtet sein, um eine Anpassung an Gestaltabweichungen zwischen Glas- und Polycarbonatscheiben zu ermöglichen. Durch die nicht durchgängige Härtung besteht jedoch bei einem solchen Sandwichelement die Gefahr, daß sich im Schadensfall große und scharfe Splitter lösen. Um den Splitterabgang zu verhindern, wird das Glaselement an seiner innenliegenden, konkaven Oberfläche mit einer Folie beschichtet.

Mit der Vorrichtung der Erfindung gelingt auch bei einem solchen, mit 8 mm relativ dicken Glaselement mit Sandwich-Aufbau eine Folienbeschichtung mit hervorragender Durchsichtigkeit aufgrund der Vermeidung von Schmutzeinschlüssen und der falten- und blasenfreien Aufbringung.

## Patentansprüche

1. Beschichtungsvorrichtung (100) zur Herstellung einer Verbundscheibe mit folgenden Einzelheiten:
- ein eine erste Förderebene bildender erster Support (10),
- eine Zuführeinheit zum Fördern einer Folie (2),
- eine Aktivierungsvorrichtung zum Bereitstellen einer haftfähigen Klebstoffschicht (2.2)
- ein Kalander (20) mit wenigstens zwei Kalanderwalzen (21, 22; 210; 210'), deren Oberflächen mit einer Elastomerbeschichtung (21.1, 22.1, 230, 230') versehen sind, wobei sich die Achsen (21.3, 213, 22.3) der Kalanderwalzen (21, 22; 210; 210') parallel zueinander und parallel zu der ersten Förderebene erstrecken und wobei die Mittelpunkte der Achsen (21.3, 213, 22.3) der Kalanderwalzen auf einer Achsverbindungslinie (A) angeordnet sind, welche Achsverbindungslinie (A) einen konstanten Winkel α mit der Ebene des ersten Supports (10) einschließt,
- eine unmittelbar vor dem Kalander (20) angeordnete Reinigungsvorrichtung (30) zum Entfernen von Fremdpartikeln von der zu beschichtenden Oberfläche des Glaselementes (3),
- eine unmittelbar vor dem Kalander (20) angeordnete Aktivierungsvorrichtung,
**dadurch gekennzeichnet, daß** wenigstens eine der Kalanderwalzen (210') aus einer Achse (240') mit endseitig angeordneten Druckkörpern (260', 262'), die axial verschiebbar und festlegbar sind, und einem zwischen den Druckkörpern (260', 262') liegendem und die Achse (240') umfassendem, elastischem Walzenquetschkörper (230') mit ringförmigem Querschnitt gebildet ist, welcher Walzenquetschkörper (230') bei einer mittels der Druckkörper (260', 262') hervorgerufenen axialen Stauchung in einem Zentralbereich (231') einen gegenüber den Randbereichen erhöhten Durchmesser aufweist.

2. Beschichtungsvorrichtung (100) zur Herstellung einer Verbundscheibe mit folgenden Einzelheiten:
- ein eine erste Förderebene bildender erster Support (10),
- eine Zuführeinheit zum Fördern einer Folie (2),
- eine Aktivierungsvorrichtung zum Bereitstellen einer haftfähigen Klebstoffschicht (2.2)
- ein Kalander (20) mit wenigstens zwei Kalanderwalzen (21, 22; 210; 210'), deren Oberflächen mit einer Elastomerbeschichtung (21.1, 22.1, 230, 230') versehen sind, wobei sich die Achsen (21.3, 213, 22.3) der Kalanderwalzen (21, 22; 210; 210') parallel zueinander und parallel zu der ersten Förderebene erstrecken und wobei die Mittelpunkte der Achsen (21.3, 213, 22.3) der Kalanderwalzen auf einer Achsverbindungslinie (A) angeordnet sind, welche Achsverbindungslinie (A) einen konstanten Winkel α mit der Ebene des ersten Supports (10) einschließt,
- eine unmittelbar vor dem Kalander (20) angeordnete Reinigungsvorrichtung (30) zum Entfernen von Fremdpartikeln von der zu beschichtenden Oberfläche des Glaselementes (3),
- eine unmittelbar vor dem Kalander (20) angeordnete Aktivierungsvorrichtung,
**dadurch gekennzeichnet, daß** wenigstens eine der Kalanderwalzen (210) aus wenigstens zwei Walzenkernkörpern (212.1, 212.2) besteht, die nebeneinander auf derselben Rotationsachse (213) angeordnet sind und die von einem elastischen Walzenkörper (230) mit ringförmigem Querschnitt umfaßt sind.

3. Beschichtungsvorrichtung (100) nach Anspruch 2, **dadurch gekennzeichnet, daß** die Walzenkernkörper (212.1, 212.2) auf einer gemeinsamen Achse (240) geführt sind.

4. Beschichtungsvorrichtung (100) nach Anspruch 2 oder 3, **dadurch gekennzeichnet, daß** die Walzenkernkörper (212.1, 212.2) über Kupplungselemente (250.1, 250.2) verbunden sind.

5. Beschichtungsvorrichtung (100) nach einem der Ansprüche 2 bis 4, **gekennzeichnet durch** einen Walzenkernkörper (212.1, 212.2) mit wenigstens einem von dem Walzenkörper (230) umfaßten Außenring (216), der über ein Wälzlager (220) mit einem Innenring (217) verbunden ist.

6. Beschichtungsvorrichtung (100) nach Anspruch 5, **dadurch gekennzeichnet, daß** der Innendurchmesser des Innenrings (217) größer ist als der Außendurchmesser der Achse (240) und daß der Innenring über wenigstens zwei radial verformbare Federelemente (219) mit der Achse (240) verbunden und im Ruhezustand konzentrisch zu dieser angeordnet ist.

7. Beschichtungsvorrichtung (100) nach Anspruch 2, **dadurch gekennzeichnet**, **dadurch gekennzeichnet, daß** der Innendurchmesser des Innenrings (217) größer ist als der Außendurchmesser der Achse (240) und daß der Innenring (217) über wenigstens zwei radial verschiebbare Kolbenelemente (266) mit der Achse (240) verbunden und im Ruhezustand konzentrisch zu dieser angeordnet ist, wobei die Kolbenelemente (266) in radialen Bohrungen (264), die in einer druckbeaufschlagten Achsbohrung (262) münden, geführt sind.

8. Beschichtungsvorrichtung (100) nach Anspruch 7, **dadurch gekennzeichnet, daß** in die Achsbohrung (262) ein Druckschlauch (268) eingezogen ist und die Kolbenelemente (266) auf der Außenwandung des Druckschlauchs (268) aufliegen.

9. Beschichtungsvorrichtung (100) nach einem der Ansprüche 2 bis 8, **dadurch gekennzeichnet, daß** die Walzenkernkörper (212.1, 212.2) jeweils an wenigstens einem Ende einen Wellenabsatz (218) aufweisen, der in eine zu dem Wellenabsatz kompatible Senkung (252) eines benachbarten Walzenkernkörpers (212.1, 212.2) und/oder eines zwischen zwei Walzenkernkörpern (212.1, 212.2) angeordneten Kopplungselements einsetzbar ist.

10. Beschichtungsvorrichtung (100) nach einem der vorhergehenden Ansprüche 1 bis 9, **dadurch gekennzeichnet, daß** die Folie (2) die rotierende obere Kalanderwalze (21; 210; 210') zwischen einem Zuführungspunkt (21.4) und einem Ablösungspunkt (21.5) über einen Winkel von 90° bis 270° umschlingt.

11. Beschichtungsvorrichtung (100) nach einem der vorhergehenden Ansprüche 1 bis 10, **dadurch gekennzeichnet, daß** die Reinigungsvorrichtung (30) eine Staubabsaugung (34) und wenigstens ein umlaufendes und die zu beschichtende Oberfläche des Glaselementes (3) kontaktierendes Bürstenband umfaßt.

12. Beschichtungsvorrichtung (100) nach einem der vorhergehenden Ansprüche 1 bis 11, **dadurch gekennzeichnet, daß** die Reinigungsvorrichtung (30) ein erstes und ein zweites Bürstenband (32, 33) umfaßt, wobei das erste Bürstenband (32) von einem Zentralbereich (37) in Richtung einer ersten Außenkante des Glaselementes (3) wirkt und das zweite Bürstenband (32) von dem Zentralbereich (37) in Richtung einer gegenüberliegenden, zweiten Außenkante des Glaselementes (3) wirkt.

13. Beschichtungsvorrichtung (100) nach Anspruch 12, **dadurch gekennzeichnet, daß** das erste und das zweite Bürstenband (32, 33) in dem Zentralbereich (37) überlappend wirken und in Förderrichtung (R) versetzt hintereinander angeordnet sind.

14. Beschichtungsvorrichtung (100) nach einem der vorhergehenden Ansprüche 1 bis 13, **dadurch gekennzeichnet, daß** die Reinigungsvorrichtung (30) wenigstens eine Befeuchtungseinrichtung (36) umfaßt, die mit einem Erdleiter elektrisch leitend verbunden ist.

15. Beschichtungsvorrichtung (100) nach einem der vorhergehenden Ansprüche 1 bis 14, **dadurch gekennzeichnet, daß** die Reinigungsvorrichtung (30) wenigstens eine Trocknungseinrichtung (38) umfaßt.

16. Beschichtungsvorrichtung (100) nach einem der vorhergehenden Ansprüche 1 bis 15, **dadurch gekennzeichnet, daß** die Elastomerbeschichtungen (21.1, 22.1, 230, 230') der oberen und unteren Kalanderwalzen (21, 22; 210; 210') eine Oberflächenhärte von 35 bis 85 Shore A (DIN 53505) aufweisen.

17. Beschichtungsvorrichtung (100) nach einem der vorhergehenden Ansprüche 1 bis 16, **dadurch gekennzeichnet, daß** die Elastomerbeschichtungen (21.1, 22.1, 230, 230') der oberen und unteren Kalanderwalze (21, 22; 210; 210') eine bei einer Verformung von 40% gemessene Stauchhärte (DIN 53577) von 5 bis 25 kPa aufweisen.

18. Beschichtungsvorrichtung (100) nach Anspruch 16 oder 17, **dadurch gekennzeichnet, daß** die Oberflächenhärte und/oder die Stauchhärte der die zu beschichtende Oberfläche des Glaselementes (3) kontaktierenden Kalanderwalze kleiner ist als die der jeweils anderen Kalanderwalze.

## Claims

1. A coating device (100) for producing a laminated glass pane and having the following details:
- a first support (10) forming a first delivery plane,
- a supply unit for delivering a sheet (2),
- an activation device for providing an adhesive layer (2.2),
- a calender (20) with at least two calender rollers (21, 22; 210; 210') having surfaces coated with an elastomer (21.1, 22.1, 230, 230'), wherein the axes (21.3, 213, 22.3) of the calender rollers (21, 22; 210; 210') extend parallel with one another and parallel with the first delivery plane and wherein the centres of the axes (21.2, 213, 22.3) of the calender rollers are situated on a connecting line (A) which includes a constant angle α with the plane of the first support (10),
- a cleaning device (30) disposed immediately in front of the calender (20) for removing foreign particles from the surface of the glass element (3) for coating, and
- an activation device disposed immediately in front of the calender (20),
**characterised in that** at least one of the calender rollers (210') comprises a shaft (240') with pressure members (260', 261') disposed at its ends and axially movable and lockable and with an elastic roller crushing member (230') lying between the pressure members (260', 262') and surrounding the shaft (240') and having an annular cross-section, wherein the roller crushing member (230'), when axially squeezed by the pressure members (260', 262'), has a central region (231') with a greater diameter than the edge regions.

2. A coating device (100) for producing a laminated glass pane and having the following details:
- a first support (10) forming a first delivery plane,
- a supply unit for delivering a sheet (2),
- an activation device for providing an adhesive layer (2.2),
- a calender (20) with at least two calender rollers (21, 22; 210; 210') having surfaces coated with an elastomer (21.1, 22.1, 230, 230'), wherein the axes (21.3, 213, 22.3) of the calender rollers (21, 22; 210; 210') extend parallel with one another and parallel with the first delivery plane and wherein the centres of the axes (21.2, 213, 22.3) of the calender rollers are situated on a connecting line (A) which includes a constant angle α with the plane of the first support (10),
- a cleaning device (30) disposed immediately in front of the calender (20) for removing foreign particles from the surface of the glass element (3) for coating, and
- an activation device disposed immediately in front of the calender (20),
**characterised in that** at least one of the calender rollers (210) comprises at least two roller core members (212.1, 212.2) disposed side by side on the same axis (213) of rotation and surrounded by an elastic roller member (230) having an annular cross-section.

3. A coating device (100) according to claim 2, **characterised in that** the roller core members (212.1, 212.2) are guided along a common shaft (240).

4. A coating device (100) according to claim 2 or 3, **characterised in that** the roller core members (212.1, 212.2) are connected by coupling elements (250.1, 250.2).

5. A coating device (100) according to any of claims 2 to 4, **characterised by** a roller core member (212.1, 212.2) comprising at least one outer ring (216) encircled by the roller member (230) and connected to an inner ring (217) by a rolling bearing (220).

6. A coating device (100) according to claim 5, **characterised in that** the inner diameter of the inner ring (217) is greater than the outer diameter of the shaft (240) and the inner ring is connected to the shaft (240) by at least two radially deformable spring elements (219) and is disposed concentrically with the shaft when inoperative.

7. A coating device (100) according to claim 2, **characterised in that** the inner diameter of the inner ring (217) is greater than the outer diameter of the shaft (240) and the inner ring (217) is connected to the shaft (240) by at least two radially movable piston elements (266) and is disposed concentrically with the shaft when inoperative, wherein the piston elements (266) are guided in radial bores (264) which open into a pressurised axial bore.

8. A coating device (100) according to claim 7, **characterised in that** a pressure hose (268) is pulled into the axial bore (262) and the piston elements (266) lie on the outer wall of the pressure hose (268).

9. A coating device (100) according to any of claims 2 to 8, **characterised in that** the roller core members (212.1, 212.2) each at at least one end have a shoulder (218) which is insertable into a compatible recess (252) in a neighbouring roller core member (212.1, 212.2) and/or into a coupling element disposed between two roller core members (212.1, 212.2).

10. A coating device (100) according to any of the preceding claims 1 to 9, **characterised in that** the sheet (2) loops round the rotating upper calender roller (21; 210; 210') through an angle of 90° to 270° between a feed point (21.4) and a separation point (21.5).

11. A coating device (100) according to any of the preceding claims 1 to 10, **characterised in that** the cleaning device (30) comprises a dust extractor (34) and at least one rotating brush strap in contact with the surface of the glass element (3) for coating.

12. A coating device (100) according to any of the preceding claims 1 to 11, **characterised in that** the cleaning device (30) comprises a first and a second brush strap (32, 33), wherein the first brush strap (32) operates from a central region (37) in the direction of a first outer edge of the glass element (3) and the second brush strap (32) operates from the central region (37) in the direction of an opposite second outer edge of the glass element (3).

13. A coating device (100) according to claim 12, **characterised in that** the first and the second brush strap (32, 33) operates when overlapping in the central region (37) and are offset one behind the other in the delivery direction (R).

14. A coating device (100) according to any of the preceding claims 1 to 13, **characterised in that** the cleaning device (30) comprises at least one moistening device (36) electrically connected to a ground wire.

15. A coating device (100) according to any of the preceding claims 1 to 14, **characterised in that** the cleaning device (30) comprises at least one drying device (38).

16. A coating device (100) according to any of the preceding claims 1 to 15, **characterised in that** the elastomer coatings (21.1, 22.1, 230, 230') on the top and bottom calender rollers (21, 22; 210; 210') have a surface hardness of 35 to 85 Shore A (DIN 53505).

17. A coating device (100) according to any of the preceding claims 1 to 16, **characterised in that** the elastomer coatings (21.1, 22.1, 230, 230') on the top and bottom calender roller (21, 22; 210; 210') have a resistance to crushing (DIN 53577) of 5 to 25 kPa after 40% deformation.

18. A coating device (100) according to claim 16 or 17, **characterised in that** the surface hardness and/or the resistance to crushing of the calender roller in contact with the surface of the glass element (3) for coating is less than that of the respective other calender roller.

## Revendications

1. Dispositif d'enduction (100) pour fabriquer un verre feuilleté qui inclut les unités suivantes:
- un premier support (10) qui forme un premier plan de transport,
- une unité d'amenée pour transporter une feuille (2),
- un dispositif d'activation pour préparer une couche de colle adhésive (2. 2),
- une calendre (20) qui comprend au moins deux rouleaux (21, 22; 210; 210') de calendre, dont les surfaces comportent un revêtement élastomère (22.1, 22.2, 230, 230'), dans laquelle les axes (21.3, 213, 22.3) des rouleaux (21, 22; 210; 210') de la calendre s'étendent parallèlement entre eux et parallèlement au premier plan de transport et dans laquelle les centres des axes (21.3, 213, 22.3) des rouleaux de la calendre sont disposés sur une ligne de liaison (A) d'axes, ligne de liaison (A) d'axes qui forme un angle constant ( avec le plan du premier support (10),
- un dispositif de nettoyage (30) disposé immédiatement avant la calendre (20) pour éloigner des particules étrangères présentes sur la surface à enduire de l'élément de verre (3),
- un dispositif d'activation disposé immédiatement avant la calendre (20),
**caractérisé en ce qu'**au moins l'un des rouleaux (210') de la calendre se compose d'un axe (240') qui comporte des corps de pression (260', 262'), disposés sur ses côtés d'extrémités et susceptibles d'être déplacés axialement et d'être fixés, et un corps compressible élastique (230') de rouleau à section transversale annulaire disposé entre les corps de pression (260', 262') et entourant l'axe (240'), corps compressible (230') de rouleau dont le diamètre est plus grand dans une zone centrale (231') que dans les zones de bords lors d'un écrasement axial provoqué au moyen des corps de pression (260', 262').

2. Dispositif d'enduction (100) pour fabriquer un verre feuilleté qui inclut les unités suivantes:
- un premier support (10) qui forme un premier plan de transport,
- une unité d'amenée pour transporter une feuille (2),
- un dispositif d'activation pour préparer une couche de colle adhésive (2. 2),
- une calendre (20) qui comprend au moins deux rouleaux (21, 22; 210; 210') de calendre, dont les surfaces comportent un revêtement élastomère (22.1, 22.1, 230, 230'), dans laquelle les axes (21.3, 213, 22.3) des rouleaux (21, 22; 210; 210') de la calendre s'étendent parallèlement entre eux et parallèlement au premier plan de transport et dans laquelle les centres des axes (21.3, 213, 22.3) des rouleaux de la calendre sont disposés sur une ligne de liaison (A) d'axes, ligne de liaison (A) d'axes qui forme un angle constant ( avec le plan du premier support (10),
- un dispositif de nettoyage (30) disposé immédiatement avant la calendre (20) pour éloigner des particules étrangères présentes sur la surface à enduire de l'élément de verre (3),
- un dispositif d'activation disposé immédiatement avant la calendre (20),
**caractérisé en ce qu'**au moins l'un des rouleaux (210) de la calendre se compose d'au moins deux corps centraux (212.1, 212.2) de rouleau qui sont disposés côte à côte sur le même axe de rotation (213) et qui sont entourés par un corps élastique (230) de rouleau à section transversale annulaire.

3. Dispositif d'enduction (100) selon la revendication 2, **caractérisé en ce que** les corps centraux (212.1, 212.2) de rouleau sont guidés sur un axe commun (240).

4. Dispositif d'enduction (100) selon la revendication 2 ou 3, **caractérisé en ce que** les corps centraux (212.1, 212.2) de rouleau sont assemblés au moyen d'éléments d'accouplement (250.1, 250.2).

5. Dispositif d'enduction (100) selon l'une quelconque des revendications 2 à 4, **caractérisé par** en ce qu'un corps central (212.1, 212.2) de rouleau comporte au moins une bague externe (216) qui est entourée par le corps (230) de rouleau et connectée à une bague interne (217) au moyen d'un palier à roulement (220).

6. Dispositif d'enduction (100) selon la revendication 5, **caractérisé en ce que** le diamètre interne de la bague interne (217) est supérieur au diamètre externe de l'axe (240) et **en ce que** la bague interne est assemblée à l'axe (240) au moyen d'au moins deux éléments élastiques (219) déformables radialement et est disposée concentrique à cet axe dans l'état de repos.

7. Dispositif d'enduction (100) selon la revendication 2, **caractérisé en ce que** le diamètre interne de la bague interne (217) est supérieur au diamètre externe de l'axe (240) et **en ce que** la bague interne (217) est assemblée avec l'axe (240) au moyen d'au moins deux éléments de piston (266) coulissant radialement et est disposée concentrique à cet axe dans l'état de repos, les éléments de piston (266) étant guidés dans des alésages radiaux (264) qui débouchent dans un alésage axial (262) auquel une pression est appliquée.

8. Dispositif d'enduction (100) selon la revendication 7, **caractérisé en ce qu'**un tube souple de pression (268) est inséré dans l'alésage axial (262) et **en ce que** les éléments de pistons (266) reposent sur la paroi externe du tube souple (268) de pression.

9. Dispositif d'enduction (100) selon l'une quelconque des revendications 2 à 8, **caractérisé en ce que** les corps centraux (212.1, 212.2) de rouleau comportent chacun à au moins l'une de ses extrémités un gradin (218) d'arbre qui peut être inséré dans un renfoncement (252), compatible avec le gradin d'arbre, d'un corps central voisin (212.1, 212.2) de rouleau et/ou d'un élément d'accouplement disposé entre deux corps centraux (212.1, 212.2) de rouleau.

10. Dispositif d'enduction (100) selon l'une quelconque des revendications précédentes, **caractérisé en ce que** la feuille (2) s'enroule autour du rouleau supérieur tournant (21; 210; 210') de calendre sur un angle de 90° à 270° entre un point d'amenée (21.4) et un point de détachement (21.5).

11. Dispositif d'enduction (100) selon l'une quelconque des revendications précédentes, **caractérisé en ce que** le dispositif de nettoyage (30) comprend une aspiration (34) de poussières et au moins une bande de brossage ou, en d'autres termes, une bande à brosses qui circule et vient au contact de la surface de l'élément de verre (3) à enduire.

12. Dispositif d'enduction (100) selon l'une quelconque des revendications précédentes, **caractérisé en ce que** le dispositif de nettoyage (30) comprend une première et une deuxième bandes de brossage (32, 33) disposées d'une manière telle que la première bande de brossage (32) intervient à partir d'une zone centrale (37) en direction d'une première arête externe de l'élément de verre (3) et que la deuxième bande de brossage (32) intervient à partir de la zone centrale (37) en direction d'une deuxième arête externe, opposée, de l'élément de verre (3).

13. Dispositif d'enduction (100) selon la revendication 12, **caractérisé en ce que** la première et la deuxième bandes de brossage (32, 33) interviennent à recouvrement dans la zone centrale (37) et sont disposées décalées l'une derrière l'autre dans la direction de transport (R).

14. Dispositif d'enduction (100) selon l'une quelconque des revendications précédentes, **caractérisé en ce que** le dispositif de nettoyage (30) comprend au moins un dispositif d'humidification (36) qui est connecté de façon électriquement conductrice avec un conducteur de masse.

15. Dispositif d'enduction (100) selon l'une quelconque des revendications précédentes, **caractérisé en ce que** le dispositif de nettoyage (30) comprend au moins un dispositif de séchage (38).

16. Dispositif d'enduction (100) selon l'une quelconque des revendications précédentes, **caractérisé en ce que** la dureté superficielle des revêtements élastomères (21.1, 22.1, 230, 230') des rouleaux supérieur et inférieur (21 , 22; 210, 210') de la calendre est de 35 à 85 Shore A (DIN 53505).

17. Dispositif d'enduction (100) selon l'une quelconque des revendications précédentes, **caractérisé en ce que** la dureté à l'écrasement des revêtements élastomères (21.1, 22.1, 230, 230') des rouleaux supérieur et inférieur (21, 22; 210, 210') de la calendre, mesurée pour une déformation de 40%, est de 5 à 25 kPa.

18. Dispositif d'enduction (100) selon la revendication 16 ou 17, **caractérisé en ce que** la dureté superficielle et/ou la dureté à l'écrasement des rouleaux de calendre qui viennent au contact de la surface de l'élément de verre (3) à enduire est inférieure à celle des autres rouleaux de la calendre.
